**Europäisches Patentamt**

**European Patent Office**

**Office européen des brevets**

(19)

(11) Veröffentlichungsnummer: **0 204 982 B1**

## EUROPÄISCHE PATENTSCHRIFT

(12)

(45) Veröffentlichungstag der Patentschrift: **13.11.91**

(51) Int. Cl.⁵: **F02M 59/46**, F02M 57/02, F02M 55/00

(21) Anmeldenummer: **86106497.0**

(22) Anmeldetag: **13.05.86**

(54) **Kraftstoffeinspritzvorrichtung für Brennkraftmaschinen.**

(30) Priorität: **14.06.85 DE 3521428**

(43) Veröffentlichungstag der Anmeldung:
**17.12.86 Patentblatt  86/51**

(45) Bekanntmachung des Hinweises auf die
Patenterteilung:
**13.11.91 Patentblatt  91/46**

(84) Benannte Vertragsstaaten:
**AT DE FR GB IT**

(56) Entgegenhaltungen:
EP-A- 0 132 798    DE-A- 2 301 419
DE-C- 585 015      FR-A- 2 366 460
US-A- 2 628 570    US-A- 3 115 304
US-A- 3 810 453    US-A- 3 818 882
US-A- 4 317 541

(73) Patentinhaber: **ROBERT BOSCH GMBH**
**Postfach 50**
**W-7000 Stuttgart 1(DE)**

(72) Erfinder: **Egler, Walter, Dr. Dipl.-Ing.**
**Thaerstrasse 36**
**W-7000 Stuttgart 31(DE)**
Erfinder: **Leblanc, Jean**
**25 rue Claude Farrère**
**F-69003 Lyon(FR)**
Erfinder: **Pfeifle, Helmut, Dr. Dipl.-Phys.**
**Sonnenbergstrasse 115**
**W-7000 Stuttgart 1(DE)**
Erfinder: **Pigeroulet, Jean**
**13 rue Pascal**
**F-69100 Villeurbanne(FR)**
Erfinder: **Rossignol, François**
**chemin de la Salette**
**F-69440 Mornant(FR)**
Erfinder: **Trachte, Dietrich**
**Rua Viscondessa de Campinas**
**BR-13100 Campinas(BR)**

Rank Xerox (UK) Business Services

## Beschreibung

Die Erfindung geht von einer Kraftstoffeinspritzvorrichtung nach der Gattung des Patentanspruchs 1 aus. Bei einer solchen, durch die US-A-3 810 453 bekannten Kraftstoffeinspritzvorrichtung ist das Druckventilschließglied auf der Seite der dieses belastenden Feder über eine Entlastungsleitung mit einem Kraftstoffversorgungsraum verbunden, der auf niedrigem Druckniveau stehend der Kraftstoffversorgung des Pumpenarbeitsraums beim Saughub des Pumpenkolbens dient. Die Vorspannung der Feder ist zur Beeinflussung des vom Druckventil zu haltenden Restdruckes in der Einspritzleitung einstellbar. Bei Beginn des Hochdruckförderhubes des Pumpenkolbens weicht das Druckventilschließglied nach Beaufschlagung der Druckschulter aus und der Kraftstoff wird weiterhin über eine lange Kraftstoffeinspritzleitung dann dem Einspritzventil zugeführt und dort in bekannter Weise unter Anhebung der Ventilnadel des Einspritzventils abgespritzt. Zur Beendigung der Einspritzung wird der Entlastungskanal aufgesteuert, der hier in einen auf der Seite der Schließfeder der Ventilnadel des Einspritzventils vorgesehenen geschlossenen Druckraum mündet. Das führt zur Erzeugung einer zusätzlichen dem in Öffnungsrichtung des Ventils wirkenden Kraftstoffeinspritzdruck entgegengerichteten Schließkraft auf die Ventilnadel des Kraftstoffeinspritzventils, so daß die Schließfeder die Ventilnadel trotz noch anstehendem hohen Einspritzdruck in Schließstellung zu bringen vermag. Dabei wird die gesamte aus dem Pumpenarbeitsraum verdrängte restliche Kraftstoffmenge von der Entlastungsleitung und dem Druckraum aufgenommen, die beide somit als Kraftstoffspeicher dienen. Schließlich ist der Druckraum noch über ein Rückschlagventil mit der Einspritzleitung verbunden, so daß bei entsprechender Druckdifferenz ein Druckausgleich zur Einspritzleitung hin erfolgen kann. Mit dieser Einrichtung soll ein schnelles Schließen des Kraftstoffeinspritzventils bei hohem Druckniveau erzielt werden. Das wird dadurch erreicht, daß der vom Pumpenkolben erzeugte Druck am Ende der Hochdruckförderung aufgeteilt wird in einen Druckanteil, der mit vermindertem Druckniveau in Öffnungsrichtung der Ventilnadel wirkt und einem Druckanteil, der zusätzlich in Schließrichtung der Ventilnadel wirkt. Hierbei bedarf es einer exakten Abstimmung der auf die Ventilnadel wirkenden Kräfte. Es besteht bei dieser Lösung die Gefahr, daß durch Druckwellen, die nach dem Schließen des Einspritzventils zwischen diesem und dem konsequenterweise ebenfalls auf hohem Druckniveau eingestellten Druckventil hin- und herlaufen, das Einspritzventil in unerwünschter Weise wieder geöffnet werden kann, was zu Nachspritzern führt. Der hohe Standdruck in der Einspritzleitung kann über das Druckventil erst abgebaut werden, wenn der Pumpenkolben eine Füllöffnung des Pumpenarbeitsraumes am Ende seines Saughubes freigegeben hat. Dann wird die Kraftstoffeinspritzleitung in den Pumpenarbeitsraum solange entlastet, bis der Haltedruck des Gleichdruckventils erreicht ist.

Aufgabe der Erfindung ist es, die bekannte Kraftstoffeinspritzvorrichtung so weiterzubilden, daß die genannten Nachteile vermieden werden. Diese Aufgabe wird erfindungsgemäß durch Patentanspruch 1 gelöst. Die erfindungsgemäße Lösung gemäß Patentanspruch 1 hat dabei den Vorteil, daß zugleich mit dem geometrischen Spritzende beim Öffnen des Entlastungskanals durch die Steuerkante am Pumpenkolben bzw. durch das Ventil auch das Druckventilschließglied in Schließrichtung, die Ventilfeder unterstützend, mit Druckkraftstoff beaufschlagt wird. Dies hat den Vorteil, daß an einer dem Pumpenarbeitsraum nahen Stelle die Kraftstoffzufuhr zur Kraftstoffeinspritzventilöffnung schlagartig unterbrochen werden kann.

Die Ausgestaltung des Druckventilschließgliedes mit einer Druckschulter kann vorteilhaft einerseits in den Spritzpausen, die zwischen Einspritzventilöffnungsstelle und Druckventil hin- und herlaufenden Druckwellen bzw. ihre Spitzenwerte in seiner Funktion als Gleichdruckventil abbauen und kann andererseits bei Spritzbeginn durch die schrittweise Beaufschlagung der Druckflächen und durch das durch den Anschlag definierte Schluckvolumen des zylinderförmigen Körpers des Druckventilschließgliedes einen sanften ansteigenden, dem Zündverzug Rechnung tragenden Einspritzverlauf erzeugen. Das wirkt sich positiv auf die Geräuschemission des Verbrennungsvorganges aus.

Es wird ferner erreicht, daß die Absteuermenge, die über den Entlastungskanal fließt, in einem Speicher eingeleitet werden kann, dessen Aufnahmerate durch Rückstellkräfte einerseits und hydraulische Kräfte andererseits dynamisch beeinflusst werden kann. Im Moment des Spritzendes wird der über den Entlastungskanal fließende Kraftstoff dynamisch voll im Sinne einer Schließkrafterhöhung am Druckventil wirksam. Die sich anschließende Kraftstoffförderung in den die Schließfeder des Druckventils aufnehmenden Raum wird unter Vermeidung einer zu hohen Druckbeanspruchung des Druckventils vom Speicherraum mit aufgenommen. Dieser bietet zusätzlich noch die Möglichkeit, in bekannter Weise im Zusammenwirken mit einem insbesondere als Magnetventil ausgebildeten Kraftstoffzumeßventil und der Drehsteuerung des Pumpenkolbens sowohl Spritzbeginn als auch Kraftstoffmenge zu steuern, wobei die Steuerkante am Pumpenkolben das Spritzende und die Füllung des Pumpenarbeitsraumes über das Magnetventil den Spritzbeginn und die Einspritzmenge steuern.

Die Ausgestaltung gemäß Patentanspruch 1 bietet zusammen mit einer vorteilhaften, sehr genau und schnell arbeitenden Kraftstoffmengen- und spritzzeitpunktsteuerung den Vorteil, ein schnelles, abruptes Spritzende zusammen mit einem den Forderungen für Leiselauf und Wirtschaftlichkeit angepaßten Spritzverlauf bei Spritzbeginn zu verwirklichen. Das macht die erfindungsgemäße Kraftstoffeinspritzvorrichtung besonders geeignet für schnell laufende, mit direkter Einspritzung und hohen Zerstäubungsdrücken arbeitende Brennkraftmaschinen.

Es ist zwar durch die FR-A-23 66 460 eine Kraftstoffeinspritzpumpe bekannt, bei der die Rückseite des Druckventilschließglieds statt mit dem Kraftstoffversorgungsraum mit der stromabwärts des Druckventils weiterführenden Kraftstoffeinspritzleitung verbunden ist. Mit dieser Maßnahme wird nach Beendigung des Einspritzvorgangs erreicht, daß die zurücklaufenden Druckwellen das Druckventilschließglied in Schließstellung halten, so daß einerseits zwar ein hohes Druckniveau in der Einspritzleitung gehalten werden kann, aber andererseits auch die Gefahr des obenerwähnten Nachspritzens besteht. Durch die EP-A- 0132 798 ist es ferner bekannt die Entlastungsleitung des Pumpenarbeitsraumes in einen Speicherraum zu führen, der eine bewegliche Wand aufweist. Mit dieser Maßnahme kann beim Saughub des Pumpenkolbens die abgesteuerte Kraftstoffmenge dem Pumpenarbeitsraum wieder zugeführt werden. Eine Beeinflussung des Schließverhaltens im Sinne eines schnellen Schließen des Kraftstoffeinspritzventils ist mit dieser Maßnahme nicht erzielbar.

Eine andere Lösung der Aufgabe besteht in der Ausgestaltung nach Anspruch 12, bei der unmittelbar mit dem Öffnen des Entlastungskanals ohne Verzögerung das Ventilschließglied des Kraftstoffeinspritzventils mit dem im Pumpenarbeitsraum noch unter Einspritzdruck stehendem Kraftstoff beaufschlagt wird. Zugleich wird die Einspritzleitung voll entlastet.

Auch mit dieser Ausgestaltung erhält man ein sehr schnelles Schließen des Kraftstoffeinspritzventils am Ende der Einspritzzeit, wobei das Ende der Einspritzzeit im wesentlichen durch den Aufbau des Druckes im Druckraum bestimmt wird und durch die Entlastung des Pumpenarbeitsraums mit anschließendem Schließen des Druckventilschließgliedes. Mit dem Durchmesser des stempelförmigen Verlängerungsteils bzw. seines den Druckraum abschließenden Teils kann die auf das Kraftstoffeinspritzventilschließglied einwirkende Kraft bestimmt werden. Man erhält ein sehr schnelles Nadelschließen und zusätzlich die oben im Zusammenhang mit dem Druckventilschließglied, genannten Vorteile.

Zeichnung

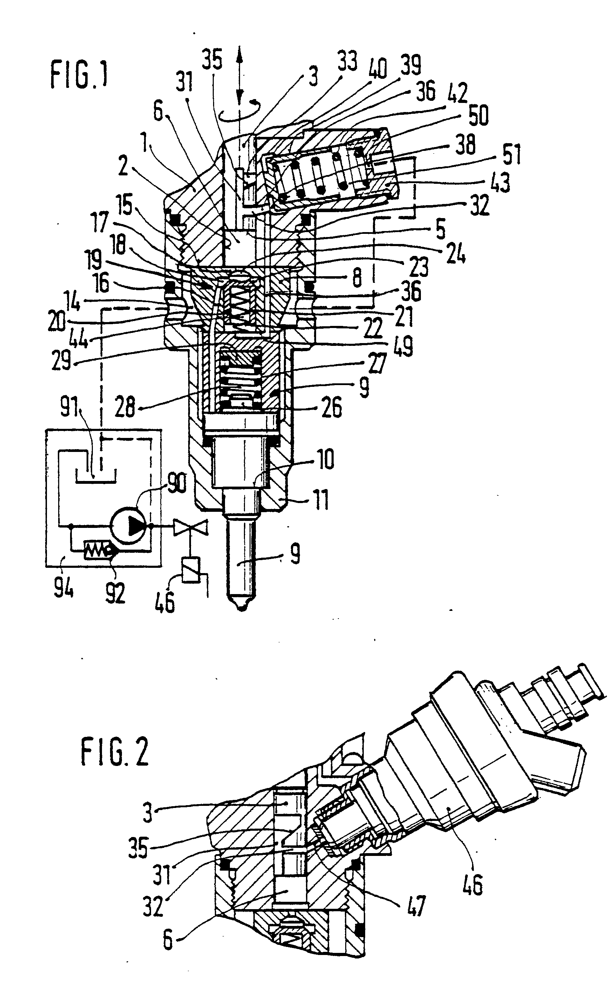

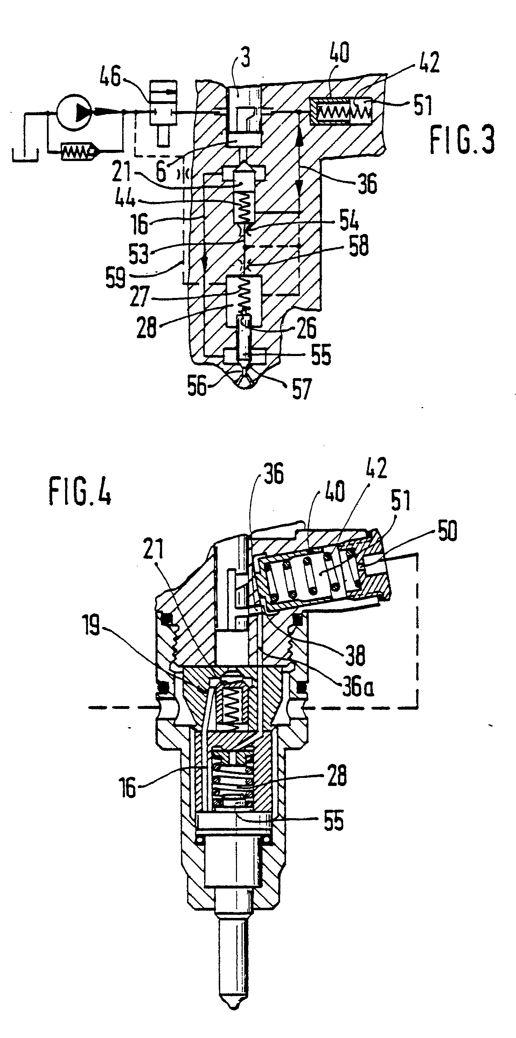

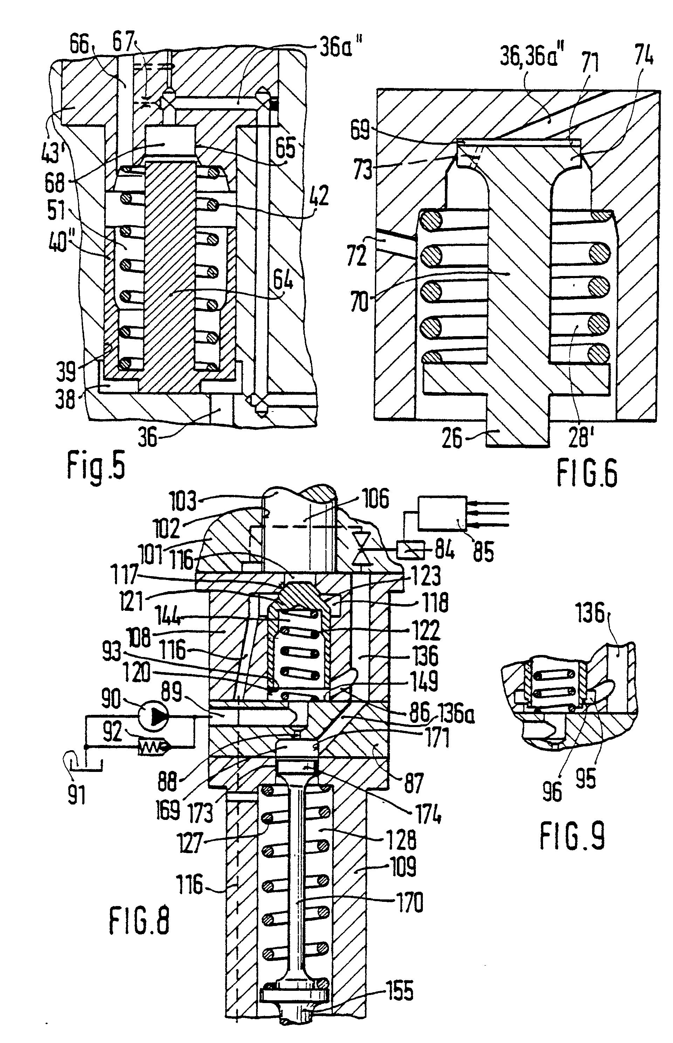

Ausführungsbeispiele der Erfindung sind in der Zeichnung dargestellt und werden in der nachfolgenden Beschreibung näher erläutert. Es zeigen Figur 1 ein erstes Ausführungsbeispiel mit den erfindungswesentlichen Teilen einer Pumpedüse im Schnitt, Figur 2 ein zweiter im Drehwinkel versetzter Schnitt durch eine solche Pumpedüse, Figur 3 ein zweites Ausführungsbeispiel der Erfindung als Schemabild mit Ausführungsvarianten, Figur 4 ein drittes Ausführungsbeispiel der Erfindung anhand einer Pumpedüse gleicherart wie beim Ausführungsbeispiel nach Figur 1 mit einem Überströmspeicher, der zugleich als Kolben zur Druckbeaufschlagung des Federraums des Einspritzdüsenteils dient, Figur 5 ein viertes Ausführungsbeispiel der Erfindung, bei dem in Abwandlung zum Ausführungsbeispiel nach Figur 4 der Speicherkolben einen kleineren Kolben bewegt, der Kraftstoff in Laufe der Ausweichbewegung des Speicherkolbens zum Ventilschließglied des Einspritzventils fördert, Figur 6 ein fünftes Ausführungsbeispiel der Erfindung mit einer besonderen Form der Druckbeaufschlagung des Ventilschließglieds des Einspritzventils, Figur 7 ein sechstes Ausführungsbeispiel der Erfindung mit einem Speicherkolben, der unterteilte Druckstufenflächen aufweist, Figur 8 ein siebtes Ausführungsbeispiel der Erfindung in der Anwendung bei einer Pumpedüse, deren Druckphase durch ein Magnetventil gesteuert wird und Figur 9 einen Ausschnitt aus einer Pumpedüse mit einer Ausführungsvariante gemäß Figur 8.

Beschreibung der Ausführungsbeispiele

Figur 1 zeigt als Kraftstoffeinspritzvorrichtung eine Pumpedüse im Teilschnitt, wobei die nicht erfindungswesentlichen Teile weggelassen wurden. Dabei ist in einem Pumpengehäuse 1 ein Pumpenzylinder 2 vorgesehen, in dem ein Pumpenkolben 3 in hier nicht näher dargestellter Weise von einem Antriebsnocken in eine hin- und hergehende, pumpende Bewegung versetzt wird. Der Pumpenkolben schließt mit seiner Stirnseite 5 in dem stirnseitig geschlossenen Pumpenzylinder 2 einen Pumpenarbeitsraum 6 ein. Der stirnseitige Verschluß des Pumpenzylinders 2 erfolgt über ein Zwischenstück 8, dem sich koaxial ein Kraftstoffeinspritzventil 9 anschließt, das durch eine an einer Schulter 10 des Kraftstoffeinspritzventils angreifende Haltemutter 11 unter Bildung der Gehäuseeinheit der Pumpedüse dicht gegen das Zwischenstück 8 gepreßt wird. Die Haltemutter ist dabei mit dem Pumpengehäuse 1 verschraubt und bildet in ihrem Innern zusammen mit der Mantelfläche des Zwischenstückes 8 einen Niederdruckraum 14, der mit der Kraftstoffversorgungsquelle 94 verbunden ist, die hier einen Kraftstoffvorratsbehälter 91 aufweist, aus dem eine Kraftstofförderpumpe 90 Kraftstoff ansaugt, zu der parallel auch ein Drucksteuerventil 92 geschaltet sein kann.

Von der Stirnseite 15 des Pumpenzylinders 2 führt eine Einspritzleitung 16 ab, deren Durchtrittsquerschnitt unmittelbar angrenzend an den Pumpenarbeitsraum von einem kegelförmig ausgebildeten Ventilsitz 17 eines Druckventils 19 begrenzt wird, wobei die Einspritzleitung anschließend an diesen Ventilsitz in einen ringförmigen Raum 18 mündet, von dem aus sie in ihrem weiteren Verlauf im Zwischenstück 8 in bekannter Weise zum Einspritzventil 9 führt.

Der Austritt der Einspritzleitung aus dem Pumpenarbeitsraum sowie der kegelförmige Ventilsitz liegen koaxial zur Achse des Pumpenkolbens. Koaxial schließt sich weiterhin an den Raum 18 ein Führungszylinder 20 an mit einem Durchmesser, der größer ist als der äußerste Durchmesser des kegelförmigen Ventilsitzes 17. In dem Führungszylinder ist ein Druckventilschließglied 21 des Druckventils 19 dicht verschiebbar, das auf seiner Rückseite von einer Ventilfeder 22 belastet wird, die sich an der Stirnseite des Führungszylinders abstützt. Das zylinderförmige Druckventilschließglied 21 ragt in den Raum 18 und verjüngt sich dort unter Bildung einer Druckschulter 23 zu einem Zapfen 24, der eine kegelförmige mit dem Ventilsitz 17 korrespondierende Dichtfläche trägt. Durch die Ventilfeder wird das Druckventilschließglied auf dem kegelförmigen Sitz 17 gehalten und verschließt dabei die Verbindung der Einspritzleitung zwischen Pumpenarbeitsraum 6 und Einspritzventil 9.

Das Einspritzventil weist zum Beispiel in bekannter Weise eine nach innen öffnende Ventilnadel auf, die eine Druckschulter 57 aufweist, auf die über die Einspritzleitung 16 der auf Hochdruck gebrachte Kraftstoff geleitet wird, durch den die Ventilnadel in Öffnungsrichtung betätigbar ist. In Schließrichtung wirkt auf die Ventilnadel über einen am Ende der Ventilnadel befindlichen Federteller 26 die Kraft einer vorgespannten Ventilschließfeder 27, die in einem Federraum 28 des Einspritzventils angeordnet ist und sich an ihrem entgegengesetzten Ende über einen Federteller 29 am stirnseitigen Ende des Federraumes 28 abstützt. Der zylindrisch ausgebildete Federraum liegt ebenfalls wie auch die Achse der Ventilnadel des Einspritzventils koaxial zur Achse des Pumpenkolbens 3.

Der Pumpenkolben 3 hat in seiner Mantelfläche eine Längsnut 31, die den Pumpenarbeitsraum mit einer Ringnut oder Teilringnut 32 verbindet. Weiterhin verbindet die Längsnut 31 den Pumpenarbeitsraum mit einer Ausnehmung 33 in der Mantelfläche des Pumpenkolbens, die auf der dem Pumpenarbeitsraum abgewandten Seite eine rechtwinklig zur Pumpenkolbenachse aus gebildete Begrenzungskante aufweist und zum Pumpenarbeitsraum hin eine schräg verlaufende, als Steuerkante ausgebildete Begrenzungskante 35 aufweist. In der gezeigten Endstellung des Pumpenkolbens am Ende des Saughubes (UT) steht die Teilringnut 32 mit der Öffnung eines Entlastungskanals 36 in Verbindung, der vom Pumpenzylinder 2 in einen Speicherraum 38 führt. Dieser wird von einem Zylinder 39 gebildet, in dem ein eine bewegliche Wand bildender Kolben 40 dicht verschiebbar angeordnet ist, auf dessen Rückseite sich eine Druckfeder 42 abstützt, die andererseits an einem den Zylinder 39 verschließenden Verschlußstopfen 43 anliegt. Vom Speicherraum führt der Entlastungskanal 36 weiter durch das Pumpengehäuse 1, das Zwischenstück 8 bis in den von der Rückseite des Ventilschließgliedes 21 im Führungszylinder 20 eingeschlossenen Raum 44. In diesem Raum ist auch die Ventilfeder 22 angeordnet.

Der Figur 2, die einen in der Drehlage versetzten Schnitt durch das Ausführungsbeispiel nach Figur 1 zeigt, ist ein Magnetventil 46 dargestellt, das mit seinem hier nicht weiter dargestellten Schließglied die Verbindung einer Kraftstoffversorgungsleitung 47 zur Kraftstoffversorgungsquelle 94 steuert. Die Kraftstoffversorgungsleitung 47 mündet in den Zylinder 2 in dem Bereich der Teilringnut 32, wenn sich der Pumpenkolben 3 am Ende seines Saughubes in der gezeigten unteren Totpunktlage UT befindet.

Im Betrieb wird bei der in Figur 1 gezeigten Pumpedüse der Pumpenkolben 3 in eine hin- und hergehende Pumpbewegung versetzt. In der gezeigten Ausgangslage im unteren Totpunkt hat der Kolben 40, der den Speicherraum 38 begrenzt, den Inhalt desselben in den Pumpenarbeitsraum 6 eingebracht. Zusätzlich ist über das Magnetventil eine bestimmte Kraftstoffmenge in den Pumpenarbeitsraum 6 zugemessen worden. Beim sich anschließenden Förderhub des Pumpenkolbens wird der Entlastungskanal 36 durch die Mantelfläche des Pumpenkolbens verschlossen und bleibt es solange, bis er wieder durch die schräge Steuerkante 35 geöffnet wird. In dem dazwischen liegenden Hub fördert der Pumpenkolben den verdrängten Kraftstoff unter Hochdruck in die Einspritzleitung 16, wobei das Druckventilschließglied 21 von seinem Sitz abgehoben wird. Der an der Ventilnadel angreifende Einspritzdruck öffnet das Kraftstoffeinspritzventil. In dem Moment, wo der Entlastungskanal 36 durch die Steuerkante 35 geöffnet wird, strömt der Kraftstoff unter gleichzeitiger Expansion in den Speicherraum 38. Der sich dort einstellende Druck wird durch die Druckfeder 42 bestimmt. Über den Entlastungskanal 36 wird zudem der Kraftstoff in den Raum 44 gefördert. Der hierhin gelangte Kraftstoff steht noch unter einem sehr hohen Druckniveau, was bewirkt, daß die in Schließrichtung des Druckventilschließglieds 21 wirkenden Kräfte erheblich zunehmen und dieses in Schließstellung bringen. In dem Moment ist die Kraftstofförderung aus dem Pumpenarbeitsraum 6 in die Einspritzleitung 16 bzw. zur Öffnung des Einspritzventils unterbrochen. Die mit dem Verschließen des Einspritzventils in dem Bereich zwischen Ventilsitz 17 und Einspritzventilnadel danach hin- und herlaufenden Druckwellen können ihre Spitzen dadurch abbauen, daß das Druckventilschließglied auf seiner Druckschulter 23 belastet wieder öffnet und die Einspritzleitung 16 zum Pumpenarbeitsraum 6 hin entlastet, der nunmehr auf geringerem Druckniveau steht. Dieses Druckniveau wird durch die den Kolben 40 beaufschlagende Federkraft bestimmt und ist merklich niedriger als der Einspritzdruck, aber höher als der Druck der Kraftstoffversorgungsquelle. Der Schließvorgang des Druckventilschließgliedes 21 wird dadurch begünstigt, daß im ersten Moment des Ansteuerns ein Absteuerstoß des auf Hochdruck von über 1000 bar komprimierten Kraftstoffes in den Raum 44 gelangt. Der Kolben 40, von einer höheren Rückstellkraft belastet, weist zusammen mit der Feder 42 ein genügend großes Trägheitsverhalten auf, so daß der Absteuerstoß im wesentlichen am Druckventilschließglied 21 wirksam wird.

Bis zum Ende der Förderhubbewegung des Pumpenkolbens wird der nach Überfahren der Entlastungskanalöffnung weiterhin verdränge Kraftstoff in den Speicherraum 38 gefördert. Beim anschließenden Saughub wird zunächst ein Teil dieses verdrängten restlichen Kraftstoffes so lange sich die Mündung des Entlastungskanals im Bereich der Ausnehmung 33 befindet wieder zurück in den Pumpenarbeitsraum gefördert, wogegen der Rest des gespeicherten Kraftstoffes bei UT über die Teilringnut 32 in den Pumpenarbeitsraum gefördert wird. Im Zeitpunkt, wo diese letztgenannte Verbindung hergestellt wird, ist das Druckniveau im Pumpenarbeitsraum erheblich abgesenkt, was das Überschieben des Kraftstoffs aus dem Speicherraum 38 begünstigt. Die Menge des auf diese Art und Weise in den Pumpenarbeitsraum eingebrachten Kraftstoffs wird bestimmt durch die Drehlage des Pumpenkolbens bzw. durch den Hub, ab dem der Entlastungskanal durch die schräg verlaufende Steuerkante aufgesteuert wird. Anschließend oder zugleich wird über das Magnetventil die für den nächsten Kraftstoffeinspritzvorgang vorgesehene Kraftstoffmenge zugemessen. Zusammen mit der zuvor bereits im Pumpenarbeitsraum befindlichen Kraftstoffmenge ergibt sich dann der Punkt des Spritzbeginns, bei dem der Druck im Pumpenarbeitsraum so weit erhöht ist, daß der Öffnungsdruck des Einspritzventils erreicht ist. Bei dieser Art von Pumpedüse bestimmt also die Drehlage des Pumpenkolbens das Spritzende und zugleich auch den Spritzbeginn bei konstanter Kraftstoffzumeßmenge über das Magnetventil. Mit Hilfe des Magnetventils werden die pro Pumpenhub zur Einspritzung gelangende Kraftstoffmenge bestimmt und zugleich der Spritzbeginn beeinflußt.

Durch das Einleiten der Kraftstoffabsteuermenge am Ende des wirksamen Förderhubs des Pumpenkolbens in den Raum 44 erhält man eine äußerst schnelle Unterbrechung der Kraftstoffeinspritzung am gewünschten Spritzende. Dies insbesondere im Sinne eines steilen Abfalls der Einspritzrate am Spritzende, so daß bis zum Spritzende höchster Kraftstoffeinspritzdruck zur Verfügung steht und eine sehr genaue Steuerzeit erzielt werden kann. Beim Spritzbeginn dagegen muß zur Aufnahme der Kraftstoffeinspritzung das Druckventilschließglied 21 aus seiner Schließlage gebracht werden. Dabei wirkt zunächst eine kleine Druckfläche auf das Ventilschließglied in der Größe des pumpenarbeitsraumseitigen Durchtrittsquerschnitts der Einspritzleitung. Nach Abheben des Ventilschließgliedes vom Ventilsitz 17 wirkt dagegen der Kraftstoffdruck auf den gesamten Querschnitt, was zu einem merklich schnelleren Ausweichen des Druckventilschließgliedes 21 führt. Dieses stellt somit ein Schluckvolumen zur Verfügung, das zunächst den weiteren Kraftstoffdruckanstieg verlangsamt, was zugleich mit einer kleineren Einspritzrate verbunden ist. Dies ist aber ganz im Sinne einer zunächst verzögerten Einbringung von Kraftstoff in den Brennraum, da zu Spritzbeginn mit einer Zündverzugszeit zu rechnen ist. Es wird somit vermieden, daß nach Ende dieser Verzugszeit eine zu große Kraftstoffmenge schlagartig zur Entflammung kommt und dabei ein unerwünschtes Verbrennungsgeräusch erzeugt (Klopfen, Nageln). Der Ausweichhub des Druckventilschließglieds 21 ist durch seinen Anschlag 49 am Ende des Führungszylinders 20 bestimmt. Der Hub des Druckventilschließglieds ist den zu erreichenden Wirkungen angepaßt. Das beim Öffnungsvorgang vom Druckventilschließglied verdrängte Kraftstoffvolumen wird in den Speicherraum 38 zurückgeführt. Die Charakteristik des Speichers bestimmt dabei dann zusätzlich die Ausweichgeschwindigkeit des Druckventilschließgliedes, da dieses bei seinem Ausweichvorgang Kraftstoff auf seiner Rückseite komprimiert. Der sich einstellende Druck wird durch den Kolben 40 des Speichers bestimmt. Man hat auch hiermit Eingriffsmöglichkeit in den Einspritzverlauf bei Spritzbeginn. Das dynamische Verhalten des Kolbens 40 kann weiterhin dadurch gesteuert werden, indem die Rückseite des Kolbens 40 mit Kraftstoffdruck beaufschlagt ist. Insbesondere ist es vorteilhaft, über eine Drosselverbindung 50 den die Druckfeder 42 aufnehmenden Raum 51 auf der Rückseite des Kolbens 40 mit der Niederdruckseite der Kraftstoffversorgung zu verbinden. Dabei kann zum Beispiel der Raum 51 auch mit dem Niederdruckraum 14 verbunden sein, der zum Kraftstoffvorratsbehälter oder zur Saugseite der Kraftstofförderpumpe entlastet ist, oder auch mit einer Druckquelle gesteuertem Druckniveaus.

In Figur 3 sind weitere Ausführungsformen und Weiterbildungen des Ausführungsbeispiels nach Figur 1 und 2 dargestellt, und zwar in schematischer Anordnung. Gleiche Teile sind hier mit denselben Positionszahlen bezeichnet. Im wesentlichen Unterschied zum Ausführungsbeispiel von Figur 1 ist hier der vom Druckventilschließglied 21 eingeschlossene Raum 44 über eine Druckleitung 53 mit dem Federraum 28 verbunden. Zur Dosierung der Ankoppelung des Federraums 28 kann weiterhin auch eine Drossel 54 in der Druckleitung 53 angeordnet sein. Wie beim ersten Ausführungsbeispiel mündet der Entlastungskanal 36 in den Raum 44. Der Absteuerstoß nach Öffnen des Entlastungskanals durch den Pumpenkolben gelangt somit sowohl in den Raum 44 als auch in den Federraum 28, wodurch zugleich mit dem vorzeitig schnellen Schließen des Druckventils 19 auch eine Erhöhung der Schließkraft am Einspritzventilschließglied 55 erzeugt wird, da der im Federraum 28 herrschende Druck dann gegebenenfalls unter Zwischenschaltung des Federtellers 26 auf die Stirnseite des Einspritzventilschließgliedes wirkt. Die erhöhte Schließkraft bewirkt ein sehr schnelles Schließen der Einspritzöffnung 56. Die weiteren zum Ausführungsbeispiel nach Figur 1 und 2 geschilderten Funktionen und Vorteile sind auch bei dieser Ausführung gegeben.

Statt der direkten Einleitung des Entlastungskanals in den Raum 44 kann, wie in Figur 3 gestrichelt wiedergegeben, der Entlastungskanal auch in den Federraum 28 oder in die Druckleitung 53 münden. Der Federraum kann dabei vorteilhaft auch über eine dem Zuströmquerschnitt gegenüber gedrosselte Verbindung 59 mit der Niederdruckseite oder dem Niederdruckraum 14 verbunden sein, wodurch ein Spüleffekt erzielt wird. Gegebenenfalls kann bei letztgenannter Version noch eine zusätzliche Drossel 58 in der Leitung 53 angeordnet sein, die zusammen mit der Drossel 54 die dynamische Auswirkung des Absteuerstoßes im Federraum 28 und im Raum 44 beeinflußt.

Bei dem Ausführungsbeispiel nach Figur 4 handelt es sich um eine Ausführungsform, die ebenfalls an einer Pumpedüse wie beim Ausführungsbeispiel nach Figur 1 verwirklicht ist. Hier sind im wesentlichen gleiche Teile vorhanden, nur endet der Entlastungskanal 36 zunächst im Speicherraum 38. Auf der Rückseite des Speicherkolbens 40 ist wiederum der Raum 51 eingeschlossen, der nun aber über eine als Weiterführung des Entlastungskanals 36 dort abzweigende Druckleitung 36a in den Federraum 28 des Kraftstoffeinspritzventils führt. Bei diesem Ausführungsbeispiel wird lediglich das Einspritzventilschließglied 55 durch den Absteuerstoß in Schließrichtung beaufschlagt, das Druckventil 19 hingegen arbeitet in üblicher Weise.

Mit dieser Einrichtung wird speziell eine Schließdruckerhöhung bei Spritzende erreicht, wobei im Sinne einer genauen Zumessung eine hydraulische Trennung zwischen Entlastungskanal 36 und weiterführendem Entlastungskanal 36a bzw. Federraum 28 vorliegt. Damit gelangt der Absteuerstoß zwar ebenfalls in den Federraum, nur ist dieser als schädliches Volumen während der Rücksaugphase von Kraftstoff in den Pumpenarbeitsraum beim Saughub des Pumpenkolbens abgekoppelt. Die hydraulischen Räume, die den Raum 51 und den Raum 28 umfassen, sind zum Zeitpunkt, bei dem dar Entlastungskanal 36 aufgesteuert wird, druckausgeglichen, wozu eine Drosselverbindung 50 zu einem Niederdruckraum entsprechend Ausgestaltung nach Figur 1 verwendet werden kann. Man erhält mit dieser Lösung ebenfalls ein schnelles Schließen des Einspritzventils am Förderende und dadurch einen guten Einspritzverlauf mit hohem Einspritzdruck über der Förderzeit und insbesondere einer hohen Einspritzrate am Spritzende. Die starke Belastung des Einspritzventilschließgliedes in Richtung Schließen gewährleistet ferner, daß auch kein Nachspritzen aufgrund von reflektierenden Druckwellen in der Einspritzleitung 16 auftritt. Ein Abbauen dieser Druckwellen begünstigt ferner wie beim Ausführungsbeispiel nach Figur 1 das Druckventilschließglied 21. Wegen der Druckfortpflanzung über den Kolben 40 im Zeitpunkt des Absteuerns über den Entlastungskanal 36 tritt auch kein Überschwingen des Kolbens auf, was sonst bei voll entlastetem Kolben der Fall wäre. Das bringt eine Senkung der Beanspruchung der Druckfeder 42 des Speichers mit sich. Zugleich wird das Auftreten von Kavitation in den vom Kolben 40 begrenzten Druckräumen vermieden.

Die in Ausführungsbeispiel Figur 4 gezeigte Volumenabkopplung über den Kolben 40 läßt sich natürlich auch auf die in Figur 1 und 3 gezeigten Ausführungen mit Druckbeaufschlagung von Federraum und dem vom Ventilschließglied eingeschlossenen Raum 44 übertragen. Es ergeben sich hiermit auch die entsprechenden, dort beschriebenen Vorteile in Verbindung mit der Abkopplung des schädlichen Volumens hinter dem Kolben 40.

Eine Weiterbildung der Ausgestaltung nach Figur 4 zeigt der Kolben 40" in der Ausgestaltung nach Figur 5. Der Kolben 40" ist ebenfalls dicht in dem Zylinder 39 verschiebbar und schließt mit seiner einen Stirnseite in diesem Zylinder den Speicherraum 38 ein, der über den Entlastungskanal 36 mit dem Pumpenzylinder 2 in Verbindung steht. Die Rückseite des Speicherkolbens 40" ist ebenfalls durch die Druckfeder 42 beaufschlagt, die sich an der Stirnseite des den Zylinder 39 verschließenden Verschlußstückes 43" abstützt. Der Speicherkolben 40" ist topfförmig ausgebildet und weist auf seiner von der Feder 42 beaufschlagten Rückseite einen sich koaxial zur Speicherkolbenachse erstreckenden Kolben 64 auf, der von der Druckfeder 42 umgeben ist, und mit einem Arbeitszylinder 65, der im Verschlußstück 43' angeordnet ist, zusammenarbeitet und dort einen Arbeitsraum 68 einschließt. In der gezeigten Ruhestellung des Speicherkolbens 40" befindet sich der Kolben 64 außerhalb des Arbeitszylinders 65. Dadurch kann der angeschlossene Druckraum beim Öffnungshub des Einspritzventilschließglieds entlastet werden, ohne daß sich ein den Öffnungshub behindernder Druck im Druckraum aufbaut. Bei Auslenkung verdrängt der Kolben 64 den in dem Arbeitszylinder 65 enthaltenen Kraftstoff. Dieser kann über einen weiterführenden Entlastungskanal 36a" zu den Druckräumen, dem Federraum 28 und/oder dem Raum 44 von Figur 1 bzw. 3 oder 4 führen. Der von der Rückseite des Speicherkolbens 40" eingeschlossene Raum 51 ist über eine Leitung 66 mit einer Kraftstoffquelle niedrigen Drucks verbunden, in ähnlicher Weise wie bereits zu Figur 1 beschrieben. Der vom Kolben 64 eingeschlossene Arbeitsraum 68 kann ferner über eine Drossel 67 mit ebenfalls dem Niederdruckraum bzw. Raum 51 verbunden sein. Die Drossel kann dabei wie in der Figur 6 gezeigt entweder in einer Verbindungsleitung zwischen dem weiterführenden Entlastungskanal 36a" und der Leitung 66 liegen oder es kann der Kolben 64 gegenüber dem Zylinderdurchmesser des Arbeitszylinders 65 einen Drosselspalt haben. Dieser kann durch eine entsprechende Ausnehmung, Anschliff oder Bohrung auch gesondert hergestellt werden.

Mit dieser Ausgestaltung wird ein Stufenkolben verwirklicht, der eine Druckübersetzung erlaubt derart, daß in dem Arbeitsraum 68 ein höherer Druck erzeugt wird als in dem Speicherraum 38. Die Ausgestaltung kann somit dazu dienen, den Druck im Federraum 28 bzw. im Raum 44 noch stärker zu erhöhen, wobei sich zusätzlich der Vorteil der hydraulischen Trennung ergibt.

Figur 6 zeigt eine Ausführungsvariante, bei der mit möglichst geringem Druckvolumen eine hohe zusätzliche Schließkraft auf das Ventilschließglied des Kraftstoffeinspritzventils mit Hilfe des Absteuerstoßes erzeugt werden kann. Der Entlastungskanal 36 bzw. der weiterführende Entlastungskanal 36a, 36a', 36a" mündet dabei in einen Druckraum 69, der von einem Endteil 74 eines stempelartig ausgeführten Verlängerungsteils 70 des Einspritzventilschließgliedes 55 bzw. des Ventiltellers 26 in einem Zylinder 71 eingeschlossen wird. Der den Stempel 70 umgebende Federraum 28' ist dabei über eine Leckleitung 72 druckentlastet. Zwischen dem Druckraum 69 und dem Federraum 28' besteht ferner eine Drosselverbindung 73, die auch dadurch verwirklicht werden kann, daß der Stempelteil 74 mit Spiel im Zylinder 71 geführt wird oder mit diesem einen durch Abtragung erzeugten Spalt bildet. Die Drosselverbindung verhindert, daß der Druck im Druckraum 69 auf zu große Werte ansteigen kann. Ferner vermeidet diese auch eine zu starke Behinderung der Ventilnadelöffnungsbewegung, wenn diese Ausgestaltung mit der Ausführungsform gemäß Fig. 4 kombiniert wird. Bei einer Kombination mit der Ausgestaltung nach Figur 5 ist dagegen bereits die Drossel 67 vorgesehen, durch die der soeben beschriebene Zweck bereits erreicht wird. Mit dieser Ausgestaltung kann eine hohe zusätzliche Schließkraft auf das Ventilschließglied des Einspritzventils am Ende des Spritzvorganges aufgebracht werden, ohne daß dabei die Eigenelastizität des hydraulischen Raumes, zum Beispiel der Federkamer 28 ein Teil der Energie des Absteuerstoßes unwirksam macht.

Bei der unmittelbaren Einleitung des Absteuerstoßes in den Federraum 28 beim Ausführungsbeispiel nach Figur 1 oder den Raum 44 beim Ausführungsbeispiel nach Figur 3 hatte sich der Vorteil ergeben, daß das Öffnungsverhalten des Schließgliedes 21 bzw. des Ventilschließgliedes 55 des Einspritzventils auch von der Arbeitscharakteristik des Speicherkolbens 40 beeinflußbar war. Dies war mit dem Nachteil verbunden, daß auch bei ganz entleertem Speicherraum 38 der Pumpenzylinder 2 mit dem gesamten Volumen des Federraumes 28 und/oder des Raumes 44 verbindbar war. Dieses Volumen wurde als schädliches Totvolumen angesehen. Bei den Ausgestaltungen nach Figur 4 und 5 wurde erreicht, daß dieses Volumen vom Pumpenzylinder abgekoppelt ist. Diese Ausgestaltungen haben jedoch keine Lösung geboten, den erstgenannten Vorteil, der gezielten, auch dynamisch wirksamen Druckbeeinflußung zu verwirklichen.

Beim Ausführungsbeispiel nach Figur 7 ist nun der Speicherkolben 40" so ausgebildet, daß er zum Speicherraum 38' hin eine kegelstumpfförmige Stirnseite 75 aufweist. Die Mantelflächen 76 dieser kegelstumpfförmigen Stirnseite 75 sind dabei als Dichtflächen ausgeführt, die mit einem ringförmigen, in den Speicherraum 38' ragenden Steg 77 als Ventilsitz zusammenarbeiten. Der Steg 77 ist als Einsatz in den den Kolben 40" führenden Zylinder ausgebildet, der dicht mit der Zylinderwand abschließt und bei anliegendem Speicherkolben 40" den Speicherraum 38' in einen ersten Teilspeicherraum 78 und einen zweiten Teilspeicherraum 79 teilt. Der zweite Teilspeicherraum 79 ist wie der Teilspeicherraum 38 von Figur 5 unmittelbar mit dem Pumpenzylinder 2 verbunden, während der erste Teilspeicherraum 78 mit dem weiterführenden Entlastungskanal 36a'" verbunden ist. Der erste Teilspeicherraum 78 wird von dem äußersten Teil 80 der Kegelmantelfläche 76 in Achsrichtung des Pumpenkolbens begrenzt. Diese Fläche 80 dient als Druckschulter, über die bei Druckerhöhung im Federraum 28 oder Druckraum 44 der Kolben 40" aus seiner Ruhelage am Steg 77 ausgelenkt werden kann. Dies erfolgt insbesondere dann, wenn das Kraftstoffeinspritzventil öffnet bzw. das Ventilschließglied 21 in Offenstellung gebracht wird. Der dabei verdrängte Kraftstoff wird im Speicherraum 38' gespeichert und kann mit dem Absteuerstoß kompensiert werden. Somit geht kein Kraftstoff über Leckleitungen, die insbesondere zur Vermeidung von überhöhtem Druck im Federraum 28 bzw. Raum 44 bei den anderen Ausführungsbeispielen nötig waren, der exakten Brennkraftstoffzumessung verloren.

Beim Ausführungsbeispiel nach Figur 7 ist weiterhin ein Druckventilschließglied 21' in abgewandelter Form vorgesehen, das in seiner Anordnung dem Ausführungsbeispiel nach Figur 3 bzw. Figur 1 entspricht, das aber mit einem Zapfen 81 in das Einspritzleitungsteilstück zwischen Raum 18 und Pumpenarbeitsraum taucht, wenn das Druckventilschließglied 21' in Schließstellung geht. Der an der Rückseite des Ventilschließglieds 21' eingeschlossene Raum 44 ist wie beim Ausführungsbeispiel nach Figur 3 mit dem Federraum 28 verbunden und über diesen mit dem Speicherraum 38'. Sobald der wirksame Förderhub des Pumpenkolbens 3 beginnt, wird zunächst das Druckventilschließglied 21' gegen die Kraft der Ventilfeder 22 ausgelenkt, so lange bis der Zapfen 81 ganz aus dem Einspritzleitungsteilstück 82 austaucht und die Verbindung zwischen Pumpenarbeitsraum 6 und Raum 18 herstellt. Erst dann kann sich der Hochdruck ungedrosselt über die weiterführende Einspritzleitung 16 zum Einspritzventil hin ausbreiten. Während des Öffnungsvorgangs des Druckventilschließglieds 21' wird auf diese Weise die Einspritzleitung 16 bzw. das Volumen zwischen Druckventilschließglied und Ventilnadel 55 etwas entlastet und muß durch den vom Pumpenkolben verdrängten Kraftstoff zunächst erst aufgefüllt werden. Zugleich macht das Druckventilschließglied 21' seine Ausweichbewegung weiter bis es an den von Figur 1 bereits bekannten Anschlag 49 gelangt. Dies führt weiterhin zu einem verzögerten Druckanstieg im System am Spritzbeginn. Man kann auf diese Art und Weise noch differenzierter den Einspritzverlauf bei Spritzbeginn verflachen im Sinne einer anfänglichen niedrigen Einspritzrate. Damit läßt sich vorteilhaft ein leiser Verbrennungsablauf erzielen. Das Vorspannen des Volumens hinter dem Ventilschließglied 21' bzw. des Federraumes 28 erzeugt bei Beginn der Einspritzung ein Abheben des Speicherkolbens 40" von seinem Sitz am Steg 77, so daß bei Beginn des Absteuerstoßes bereits eine durchgehende Verbindung zum Federraum 28 bzw. Raum 44 besteht. Durch diese Ausgestaltung wird ein sehr schneller Druckaufbau in diesen beiden Räumen erzielt und damit ein sehr schnelles Beenden des Einspritzvorganges. Das Trägheitsverhalten des Speicherkolbens 40" behindert dabei nicht die Wirksamkeit des Absteuerstoßes.

Das Ausführungsbeispiel nach Figuren 8 und 9 arbeitet mit einer Pumpedüse, bei der die Steuerung der pro Pumpenkolbenhub einzuspritzenden Kraftstoffmenge mit Hilfe eines Magnetventils erfolgt, das anders als bei den vorstehenden Ausführungsbeispielen ein Ventilschließglied aufweist, das während des gesamten Pumpenkolbenförderhubs auf der einen Seite vom Pumpenförderdruck beaufschlagt ist. Bei dieser Art von Kraftstoffeinspritzvorrichtungen bedarf es des in den vorgenannten Beispielen beschriebenen Speicherraumes 38 nicht, da die Phase des Geschlossenseins dieses Ventils allein die Kraftstoffeinspritzmenge und den Spritzzeitpunkt bestimmt. Diese Einrichtung arbeitet jedoch vorteilhaft ebenfalls mit einem Druckventilschließglied wie bei den vorstehenden Ausführungsbeispielen zusammen und es wird ebenfalls der Absteuerstoß dazu ausgenutzt, eine zusätzliche Kraft auf das Ventilschließglied des Einspritzventils und/oder das Druckventilschließglied zu erzeugen.

In Figur 8 ist ein Teil einer Kraftstoffeinspritzvorrichtung im Schnitt dargestellt. Diese baut hierbei ebenfalls auf einer Kraftstoffeinspritzvorrichtung auf, wie sie zum Beispiel in den Figuren 1, 4 und 7 wiedergegeben sind. Es handelt sich auch hier um eine sogenannte Pumpedüse. Grundsätzlich ließe sich jedoch die anhand dieser beispielhaften Pumpe ausgeführte Ausgestaltung auch bei anderen Kraftstoffeinspritzpumpen verwirklichen. Bei der Ausgestaltung einer Pumpedüse ergeben sich jedoch die auch bereits bei den obenstehenden Ausführungsbeispielen genannten Vorteile einer kurzen Einspritzzeit mit hohem Einspritzdruck bei Vermeidung schädlicher Leitungseinflüsse zwischen Kraftstoffeinspritzpumpe und Kraftstoffeinspritzventil. Von der Pumpedüse ist bei der Ausgestaltung bei Figur 8 lediglich der Pumpenkolben 103 gezeigt, der durch bereits im vorigen Beispiel erwähnte Mittel angetrieben wird und in dem Pumpengehäuse 101 in einem Pumpenzylinder 102 gleitet und dort den Pumpenarbeitsraum 106 einschließt. Wie beim Ausführungsbeispiel nach Figur 1 schließt sich an das Pumpengehäuse 101 ein Zwischenstück 108 an, in dem das Druckventilschließglied 121 in gleicher Ausgestaltung in dem Führungszylinder 120 angeordnet ist. Das Druckventilschließglied 121 weist eine mit einem kegelförmigen Ventilsitz 117 zusammenarbeitende Dichtfläche auf und hat eine Druckschulter 123, die dem Druck in dem sich an dem Ventilsitz 117 anschließenden Raum 118 ausgesetzt ist und bei Druckbeaufschlagung das Druckventilschließglied entgegen seine Ventilfeder 122 bis zu einem Anschlag 149 am Ende des Führungszylinders verschiebt. In dem Zwischenstück 108 verläuft ferner ein Entlastungs- und Füllkanal 136, dessen Verbindung zum Pumpenarbeitsraum 106 über ein Magnetventil oder elektrisch steuerbares Ventil 84 gesteuert wird. Das elektrisch steuerbare Ventil wird von einer elektrischen Steuereinrichtung 85 in Abhängigkeit von Betriebsparametern der Brennkraftmaschine angesteuert. In dem Zwischenstück 108 teilt sich der Entlastungs- und Füllkanal 136 auf in einen ersten weiterführenden Teilkanal 136a und einen zweiten Teilkanal 86, der am anschlagseitigen Ende des Führungszylinders 120 in diesen einmündet. An das Zwischenstück 108 schließt sich ein zweites Zwischenstück 87 an, an das das Gehäuse des Kraftstoffeinspritzventils 109 zur Anlage kommt und mit einer Mutter ähnlich der Mutter 11 bei Figur 1 zu einem dichtschließenden Verbund der Teile 87, 108 und 102 verschraubt wird. Im zweiten Zwischenstück 87 führt der erste Teil 136a in einen Druckraum 169, wie er bereits in Figur 6 gezeigt ist und der von einem stempelförmigen Verlängerungsteil 170, der mit dem Ventilschließglied 155 des Kraftstoffeinspritzventils verbunden ist, eingeschlossen wird. Der den Verlängerungsteil 170 aufnehmende und auch die Einspritzventilschließfeder 127 enthaltende Ventilfederraum 128 hat eine Drosselverbindung 173 zum Druckraum 169, der Druckraum 169 hat eine Drosselverbindung 88 zu einer Kraftstoffversorgungsleitung 89, die von einer Kraftstofförderpumpe 90 aus einem Kraftstoffvorratsbehälter 91 gespeist wird. Die Kraftstofförderpumpe dient zusammen mit einem Drucksteuerventil 92 als Kraftstoffversorgungsquelle konstanten Drucks, aus der der Pumpenarbeitsraum mit Kraftstoff versorgt werden kann und zu der die für die Einspritzung nicht benötigte Kraftstoffmenge hin abströmen kann. Die Kraftstoffversorgungsleitung 89 steht ferner mit dem vom Druckventilschließglied 121 in dem Führungszylinder 120 eingeschlossenen Raum 144 in Verbindung, der wiederum über den zweiten Teilkanal 86 mit dem Entlastungs- und Füllkanal 136 verbindbar ist. Während des Saughubs des Pumpenkolbens kann auf diese Weise bei geöffnetem elektrisch gesteuertem Ventil 84 der Pumpenarbeitsraum 106 über den Entlastungs- und Füllkanal 136 mit Kraftstoff gefüllt werden.

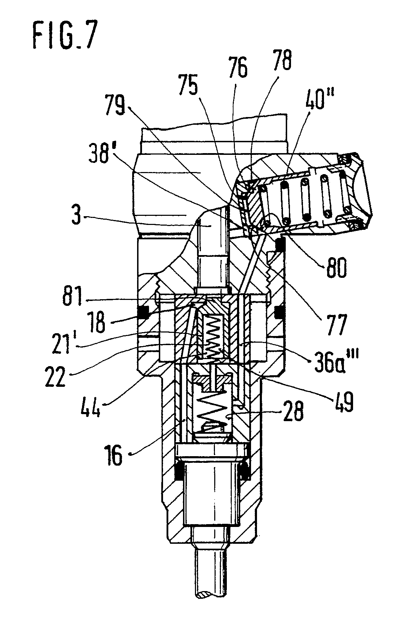

Der zweite Teilkanal 86 wird jedoch durch die Mantelfläche des Druckventilschließgliedes zusammen mit der anschlagseitigen Stirnkante 93 desselben gesteuert. In der gezeigten Ausgangsstellung, bei der sich das Druckventilschließglied in Anlage am Ventilsitz 117 befindet, hat diese Stirnkante dem zweiten Teilkanal 86 geöffnet. Dieser Zustand entspricht dem Saughub des Pumpenkolbens 103. Beim anschließenden Pumphub des Pumpenkolbens kann dieser Kraftstoff auf demselben Wege wieder zurück in die Kraftstoffversorgungsleitung 89 fördern, so lange das elektrisch gesteuerte Ventil 84 geöffnet ist. Im Zeitpunkt des Spritzbeginns schließt das Ventil 84 den Entlastungskanal 136. Das Druckventilschließglied öffnet sich unter dem steigenden Druck im Pumpenarbeitsraum 106 und es kann der geförderte Kraftstoff über die Kraftstoffeinspritzleitung 116 zum Austritt am Kraftstoffeinspritzventil gelangen. Ist die gewollte Einspritzmenge erreicht, so öffnet das elektrisch gesteuerte Ventil 84 wieder den Entlastungskanal 136 und es strömt der restliche vom Pumpenkolben geförderte Kraftstoff unmittelbar in den Druckraum 169, da zu diesem Zeitpunkt zunächst noch das Druckventilschließglied 121 den zweiten Teilkanal 86 geschlossen und somit auch die Verbindung zur Kraftstoffversorgungsleitung 89 bzw. zum Entlastungsraum verschlossen hat. In dem Druckraum 169 kann sich in Unterstützung der Schließbewegung des Ventilschließglieds des Kraftstoffeinspritzventils ein hoher Druck aufbauen. Mit der Drosselverbindung 88 bzw. 173 wird der Pumpenarbeitsraum nach Beendigung der Einspritzung entlastet. Das Druckventilschließglied wird von seiner Ventilfeder nach oben auf den Ventilsitz 117 hin bewegt, wobei zugleich auch der zweite Teilkanal 86 öffnet. Dies bewirkt Entlastung des gesamten Systems von Druckraum 169, Raum 144 und Entlastungskanal 136 zur Niederdruckseite hin. Zur Vergrößerung des bei der Bewegung des Druckventilschließglieds gesteuerten Querschnitts pro Hubeinheit, kann wie in Figur 10 gezeigt, der zweite Teilkanal 86 auch in eine in der Wand des Führungszylinders 120 vorgesehene Ringnut 95 münden, die ebenfalls durch eine an der Mantelfläche des Druckventilschließgliedes vorgesehene Steuerkante 96 gesteuert wird.

Auch mit dieser Ausgestaltung erhält man ein sehr schnelles Schließen des Kraftstoffeinspritzventils am Ende der Einspritzzeit, wobei das Ende der Einspritzzeit im wesentlichen durch den Aufbau des Druckes im Druckraum 169 bestimmt wird und nicht durch die Entlastung des Pumpenarbeitsraum mit anschließendem Schließen des Druckventilschließgliedes. Mit dem Durchmesser des stempelförmigen Verlängerungsteils 170 bzw. seines den Druckraum 169 im Zylinder 171 abschließenden Teils 174 kann die auf das Kraftstoffeinspritzventilschließglied einwirkende Kraft bestimmt werden. Dabei muß auch der freie Querschnitt der Drosselverbindung 88 bzw. 173 mit berücksichtigt werden.

Auch bei diesem Ausführungsbeispiel erhält man also ein sehr schnelles Nadelschließen und profitiert von den Vorteilen des Druckventilschließgliedes, die zu den vorgenannten Ausführungsformen beschrieben wurden.

**Patentansprüche**

1. Kraftstoffeinspritzvorrichtung für Brennkraftmaschinen mit einem Pumpenkolben (3), der in einem Pumpenzylinder (2) einen Pumpenarbeitsraum (6) einschließt, der mit einem Kraftstoffeinspritzventil (9) über eine insbesondere in einem den Pumpenzylinder (2) und das Kraftstoffeinspritzventil (9) enthaltenden Gehäuse (Pumpedüse) verlaufenden Kraftstoffeinspritzleitung (16) verbindbar ist, in der ein in Förderrichtung öffendendes Druckventil (19) angeordnet ist, und mit einem Steuerventil (35, 2, 36), durch das der Pumpenarbeitsraum (6) mit einem Entlastungskanal (36) wenigstens ab dem Ende des wirksamen Förderhubs des Pumpenkolbens verbunden ist, wobei der Entlastungskanal (36) mit einem eine bewegliche Wand aufweisenden Kraftstoffspeicherraum (38) einer Speichereinrichtung in Verbindung steht, und mit einem einen Durchtrittsquerschnitt der Kraftstoffeinspritzleitung (16) begrenzenden Ventilsitz (17), mit dem ein dicht in einem Führungszylinder (20) geführtes Druckventilschließglied (21) des Druckventils zusammenarbeitet, dessen die Dichtfläche tragendes Ende aus dem Führungszylinder in einen mit der Kraftstoffeinspritzleitung verbundenen Raum (18) taucht, dort eine Druckschulter (23) aufweist und das auf seiner Rückseite von einer Ventilfeder (22) belastet ist und entgegen der Kraft der Ventilfeder bis zur Anlage der Rückseite an einem Anschlag verschiebbar ist, dadurch gekennzeichnet, daß die bewegliche Wand gegen eine in Richtung auf den Kraftstoffspeicherraum (38) wirkende Kraft verstellbar ist und daß das Druckventilschließglied (21) auf seiner Rückseite im Führungszylinder (20) einen Raum (44) einschließt, der mit dem Kraftstoffspeicherraum (38) verbunden ist, oder der mit einem zu einer Entlastungsleitung (66) hin mittels einer Drossel (50, 67) abgekoppelten Arbeitsraum (51, 68) auf der dem Kraftstoffspeicherraum (38) abgewandten Seite der Speichereinrichtung verbunden ist, wobei der Arbeitsraum (51, 68) von einer mit der beweglichen Wand (40, 64) verbundenen Abschlußwand begrenzt ist.

2. Kraftstoffeinspritzvorrichtung nach Anspruch 1, dadurch gekennzeichnet, daß der Raum (44) mit einem Druckraum (28, 69) verbunden ist, dessen Begrenzungswand zum Teil die Rückseite des ventilschließglieds des Kraftstoffeinspritzventils (9) bildet und der Druckraum (28, 69) über eine Drossel (73) mit einer Entlastungsleitung (59,72) verbunden ist.

3. Kraftstoffeinspritzvorrichtung nach Anspruch 2, dadurch gekennzeichnet, daß in der Verbindung zwischen dem Druckraum (28, 69) und dem Raum (44) eine Drossel (54, 58) angeordnet ist (Fig. 3).

4. Kraftstoffeinspritzvorrichtung nach Anspruch 1 bis 3, dadurch gekennzeichnet, daß die bewegliche Wand als in einem Zylinder (39) gegen eine Rückstellfeder (42) verschiebbarer Speicherkolben (40) ausgebildet ist.

5. Kraftstoffeinspritzvorrichtung nach Anspruch 4, dadurch gekennzeichnet, daß der Speicherkolben (40") auf seiner zum Kraftstoffspeicherraum (38') weisenden Fläche eine Dichtfläche (76) aufweist, die mit einem Ventilsitz (77) zusammenwirkt, und die den Kraftstoffspeicherraum (38') bei Anlage auf dem Ventilsitz in einen ersten mit dem Raum (44) verbundenen Teilspeicherraum (78) und einen zweiten über den Entlastungskanal (36) mit dem Pumpenzylinder (2) verbundenen zweiten Teilspeicherraum (79) teilt (Fig. 7).

6. Kraftstoffeinspritzvorrichtung nach Anspruch 5, dadurch gekennzeichnet, daß beide Teilspeicherräume (78, 79) je von einem Teil der stirnseitigen Fläche des Speicherkolbens (40") begrenzt sind (Fig. 7).

7. Kraftstoffeinspritzvorrichtung nach Anspruch 6, dadurch gekennzeichnet, daß die Stirnseite (75) des Speicherkolbens (40") kegelförmig ausgebildet ist und dessen Kegelmantelfläche als Dichtfläche mit einem ringförmigen, in den Speicherraum (38') ragenden Steg (77) als Ventilsitz zusammenarbeitet (Fig. 7).

8. Kraftstoffeinspritzvorrichtung nach Anspruch 7, dadurch gekennzeichnet, daß der Steg (77) durch einen Einsatz in dem den Speicherkolben (40") aufnehmenden Zylinder (39) ausgebildet ist (Fig. 7).

9. Kraftstoffeinspritzvorrichtung nach Anspruch 4, dadurch gekennzeichnet, daß die Abschlußwand durch einen Kolben (64) kleineren Durchmessers gebildet ist, der durch den Speicherkolben (40") bewegbar ist, durch den der Arbeitsraum (68) in einem Arbeitszylinder (65) eingeschlossen wird, der zur mittelbaren Förderung der über den Entlastungskanal (36) abströmenden Kraftstoffmenge über eine weiterführende Druckleitung (36a") mit dem Raum (44) verbunden ist und über eine Drossel (67, 73) entlastbar ist (Fig. 5 und 6).

10. Kraftstoffeinspritzvorrichtung nach Anspruch 2, dadurch gekennzeichnet, daß der Druckraum (69) von einem von dem Ventilschließglied des Kraftstoffeinspritzventils ventilfederseitig betätigten Stempel (70) in einem von diesem begrenzten Zylinder (71) eingeschlossen ist (Fig. 5 und 6).

11. Kraftstoffeinspritzvorrichtung nach Anspruch 10, dadurch gekennzeichnet, daß die Entlastungsdrossel zwischen der zylindrischen Mantelfläche des Stempels (74) und der Wand des Zylinders (71) gebildet ist und in den entlasteten Federraum (28') des Kraftstoffeinspritzventils mündet.

12. Kraftstoffeinspritzvorrichtung für Brennkraftmaschinen mit einem Pumpenkolben (3), der in einem Pumpenzylinder (2) einen Pumpenarbeitsraum (6) einschließt, der mit einem Kraftstoffeinspritzventil (9) über eine insbesondere in einem den Pumpenzylinder (102) und das Kraftstoffeinspritzventil(9) enthaltenden Gehäuse (Pumpedüse) verlaufenden Kraftstoffspritzleitung (116) verbindbar ist, in der ein in Förderrichtung öffnendes Druckventil angeordnet ist, und mit einem Steuerventil (84), durch das der Pumpenarbeitsraum (6) mit einem Entlastungskanal (136, 136a) wenigstens ab dem Ende des wirksamen Förderhubs des Pumpenkolbens verbunden ist, wobei der Entlastungskanal (136, 136a) mit einem eine bewegliche Wand aufweisenden Kraftstoffspeicherraum (169) in Verbindung steht, und mit einem einen Durchtrittsquerschnitt der Kraftstoffeinspritzleitung (116) begrenzenden Ventilsitz (117), mit dem ein dicht in einem Führungszylinder (120) geführtes Druckventilschließglied (121) des Druckventils zusammenarbeitet, dessen die Dichtfläche tragendes Ende aus dem Führungszylinder in einen mit der Kraftstoffeinspritzleitung verbundenen Raum (118) taucht, dort eine Druckschulter (23) aufweist und das auf der Rückseite von einer Ventilfeder (122) belastet ist und entgegen der Kraft der Ventilfeder (122) bis zur Anlage an einen Anschlag verschiebbar ist, dadurch gekennzeichnet, daß der Entlastungskanal (136) als Füll- und Entlastungskanal über den Kraftstoffspeicher (169) und eine Drossel (88) mit einer Versorgungsquelle (90) verbunden ist, die beim Saughub des Pumpenkolbens und während der von dem Ventil (84) gesteuerten Entlastungsphase während des Förderhubs des Pumpenkolbens über den Entlastungskanal (136) mit dem Pumpenarbeitsraum (116) verbunden ist, und das Druckventilschließglied (121) auf seiner Rückseite im Führungszylinder (120) einen Raum (144) einschließt, der mit der Kraftstoffversorgungsquelle (90) ständig und mit dem Entlastungskanal (136) nur in Schließstellung des Druckventilschließgliedes verbunden ist, und daß die bewegliche Wand (174) des Kraftstoffspeichers (16a) von einem von dem Ventilschließglied (155) des Kraftstoffeinspritzventils ventilfederseitig betätigten Stempel (170) in einem von diesem begrenzten Zylinder (171) gebildet ist.

13. Kraftstoffeinspritzvorrichtung nach Anspruch 12, dadurch gekennzeichnet, daß das Druckventilschließglied (121) als topfförmigr Kolben ausgebildet ist, in dessen Innerem die Ventilfeder (122) angeordnet ist, daß ein den Raum (144) mit dem Entlastungskanal (136) verbindenden Kanal (86) in den anschlagseitigen Teil des Führungszylinders (120) in dessen radialer Wand mündet und durch eine Steuerkante (96) an der zylindrischen Wand des topfenförmiges Kolbens bei dessen Anlage am Anschlag (149) verschlossen ist.

14. Kraftstoffeinspritzvorrichtung nach Anspruch 13, dadurch gekennzeichnet, daß der Kanal (86) in eine Ringnut (95) in der Wand des Führungszylinders (120) mündet.

15. Kraftstoffeinspritzvorrichtung nach einem der vorstehenden Ansprüche, dadurch gekennzeichnet, daß die Druckschulter (123) des Druckventilschließgliedes (121) vom Druck in der Kraftstoffeinspritzleitung (116) zwischen Einspritzventil und dem Druckventilschließglied beaufschlagt ist.

**Claims**

1. Fuel injection apparatus for internal-combustion engines with a pump piston (3), which encloses in a pump cylinder (2) a pump working space (6), which can be connected to a fuel injection valve (9) via a fuel injection line (16), which runs in particular in a housing containing the pump cylinder (2) and the fuel injection valve (9) (unit fuel injector) and in which there is arranged a pressure valve (19) opening in the delivery direction, and with a control valve (35, 2, 36), by which the pump working space (6) is connected to a relief channel (36) at least from the end of the effective delivery stroke of the pump piston, the relief channel (36) being in connection with a fuel accumulator space (38), having a movable wall, of an accumulator device, and with a valve seat (17) bounding a passage cross-section of the fuel injection line (16), with which seat there interacts a pressure-valve closing member (21) of the pressure valve, which is guided in a leak-proof manner in a guide cylinder (20) and the end of which bearing the sealing surface emerges from the guide cylinder to enter a space (18) connected to the fuel injection line, has there a thrust shoulder (23) and is loaded on its rear side by a valve spring (22) and is displaceable against the force of the valve spring until contact of the rear side is made with a stop, characterised in that the movable wall can be adjusted against a force acting in the direction of the fuel accumulator space (38) and in that the pressure-valve closing member (21) encloses on its rear side in the guide cylinder (20) a space (44) which is connected to the fuel accumulator space (38) or which is connected to a working space (51, 68), isolated towards a relief line (66) by means of a restrictor (50, 67), on the side of the accumulator device remote from the fuel accumulator space (38), the working space (51, 68) being bounded by a terminating wall connected to the movable wall (40, 64).

2. Fuel injection apparatus according to Claim 1, characterised in that the space (44) is connected to a pressure space (28, 69), the bounding wall of which in part forms the rear side of the valve closing member of the fuel injection valve (9) and the pressure space (28, 69) is connected to a relief line (59, 72) via a restrictor (73).

3. Fuel injection apparatus according to Claim 2, characterised in that a restrictor (54, 58) is arranged in the connection between the pressure space (28, 69) and the space (44) (Fig. 3).

4. Fuel injection apparatus according to Claims 1 to 3, characterised in that the movable wall is designed as an accumulator piston (40) which is displaceable in a cylinder (39) against a restoring spring (42).

5. Fuel injection apparatus according to Claim 4, characterised in that the accumulator piston (40") has on its face towards the fuel accumulator space (38') a sealing surface (76), which interacts with a valve seat (77), and which, upon contact on the valve seat, divides the fuel accumulator space (38') into a first part-accumulator space (78), connected to the space (44), and a second second (sic) part-accumulator space (79), connected to the pump cylinder (2) via the relief channel (36) (Fig. 7).

6. Fuel injection apparatus according to Claim 5, characterised in that both part-accumulator spaces (78, 79) are each bounded by a part of the end face area of the accumulator piston (40") (Fig. 7).

7. Fuel injection apparatus according to Claim 6, characterised in that the end face (75) of the accumulator piston (40") is of a conical design and the cone circumferential surface of which interacts as sealing surface with an annular land (77), protruding into the accumulator space (38'), as valve seat (Fig. 7).

8. Fuel injection apparatus according to Claim 7, characterised in that the land (77) is formed by an inset in the cylinder (39) receiving the accumulator piston (40") (Fig. 7).

9. Fuel injection apparatus according to Claim 4, characterised in that the terminating wall is formed by a piston (64) of smaller diameter, which can be moved by the accumulator piston (40"), by which the working space (68) is enclosed in a working cylinder (65), which, for indirect delivery of the quantity of fuel flowing off via the relief channel (36), is connected to the space (44) via a continuing pressure line (36a") and can be relieved via a restrictor (67, 73) (Figs. 5 and 6).

10. Fuel injection apparatus according to Claim 2, characterised in that the pressure space (69) is enclosed by a ram (70) operated on the valve spring side by the valve closing member of the fuel injection valve, in a cylinder (71) bounded by the said ram (Figs. 5 and 6).

11. Fuel injection apparatus according to Claim 10, characterised in that the relief restrictor is formed between the cylindrical circumferential surface of the ram (74) and the wall of the cylinder (71) and opens out into the relieved spring space (28') of the fuel injection valve.

12. Fuel injection apparatus for internal-combustion engines with a pump piston (3), which encloses in a pump cylinder (2) a pump working space (6), which can be connected to a fuel injection valve (9) via a fuel injection line (116), which runs in particular in a housing containing the pump cylinder (102) and the fuel injection valve (9) (unit fuel injector) and in which there is arranged a pressure valve opening in the delivery direction, and with a control valve (84), by which the pump working space (6) is connected to a relief channel (136, 136a) at least from the end of the effective delivery stroke of the pump piston, the relief channel (136, 136a) being in connection with a fuel accumulator space (169), having a movable wall, and with a valve seat (117) bounding a passage cross-section of the fuel injection line (116), with which seat there interacts a pressure-valve closing member (121) of the pressure valve, which is guided in a leak-proof manner in a guide cylinder (120) and the end of which bearing the sealing surface emerges from the guide cylinder to enter a space (118) connected to the fuel injection line, has there a thrust shoulder (23) and is loaded on the rear side by a valve spring (122) and is displaceable against the force of the valve spring (122) until contact is made with a stop, characterised in that the relief channel (136) is connected as filling and relief channel via the fuel accumulator (169) and a restrictor (88) to a supply source (90), which, upon the suction stroke of the pump piston and during the relief phase controlled by the valve (84) during the delivery stroke of the pump piston, is connected via the relief channel (136) to the pump working space (116), and the pressure-valve closing member (121) encloses on its rear side in the guide cylinder (120) a space (144) which is connected constantly to the fuel supply source (90) and is connected only in the closed position of the pressure-valve closing member to the relief channel (136), and in that the movable wall (174) of the fuel accumulator (16a) is formed by a ram (170), operated on the valve spring side by the valve closing member (155) of the fuel injection valve, in a cylinder (171) bounded by the said ram.

**13.** Fuel injection apparatus according to Claim 12, characterised in that the pressure-valve closing member (121) is designed as a pot-shaped piston, in the interior of which the valve spring (122) is arranged, in that a channel (86), connecting the space (144) to the relief channel (136), opens out into the stop-side part of the guide cylinder (120) in the radial wall of the latter and is closed by a metering edge (96) on the cylindrical wall of the pot-shaped piston upon contact of the latter with the stop (149).

**14.** Fuel injection apparatus according to Claim 13, characterised in that the channel (86) opens out into an annular groove (95) in the wall of the guide cylinder (120).

**15.** Fuel injection apparatus according to one of the preceding claims, characterised in that the thrust shoulder (123) of the pressure-valve closing member (121) is subjected to the pressure in the fuel injection line (116) between injection valve and the pressure-valve closing member.

## Revendications

**1.** Dispositif d'injection de carburant pour moteurs à combustion interne avec un piston de pompe (3) qui définit une chambre de pompe de travail (6) dans un cylindre de pompe (2), qu'on peut relier à une soupape d'injection (9) de carburant par l'intermédiaire d'un conduit (16) d'injection de carburant passant dans un boîtier (buse de pompe) comprenant le cylindre de pompe (2) et la soupape d'injection de carburant (9), conduit (16) dans laquelle on implante une soupape de pression (19) s'ouvrant dans le sens du refoulement, avec une vanne de commande (35, 2, 36) grâce à laquelle on relie la chambre de travail de pompe (6) à un canal de décharge (36) au moins à partir de la fin de la course efficace de refoulement du piston de pompe, le canal de décharge (36) étant en communication avec une chambre réservoir de carburant (38), présentant une paroi mobile, d'un dispositif de réserve, et comprenant un siège de soupape (17) délimitant une section de passage du conduit d'injection de carburant (16), avec laquelle coopère un organe de fermeture de soupape de pression (21) de la soupape de pression guidé de façon étanche dans un cylindre de guidage (20), dont l'extrémité portant la surface d'étanchéité plonge depuis le cylindre de guidage dans une chambre (18) communiquant avec le conduit d'injection de carburant, avec un épaulement de pression (23) à cet endroit, et qui sur sa face arrière est sous la charge d'un ressort (22) de soupape et peut coulisser en opposition à la force du ressort de soupape, jusqu'au contact de la face arrière avec une butée, dispositif d'injection caractérisé en ce que la paroi mobile est réglable en opposition à une force agissant vers la chambre réservoir de carburant (38) et en ce que l'organe de fermeture (21) de soupape délimite sur sa face arrière dans le cylindre de guidage (20) une chambre (44), qu'on relie à la chambre réservoir de carburant (38), ou qu'on relie avec une chambre de travail (51,68) découplée d'un conduit de décharge (66) au moyen d'un étranglement (50,67) sur la face du dispositif de réserve opposée à la chambre réservoir de carburant (38), la chambre de travail (51,68) étant délimitée par une paroi de fermeture reliée à la paroi mobile (40,64).

**2.** Dispositif d'injection de carburant selon la revendication 1, caractérisé en ce qu'on relie la chambre (44) à une chambre de pression (28,69) dont la paroi de délimitation forme en partie la face arrière de l'organe de fermeture de soupape de la soupape d'injection de carburant (9) et on relie la chambre de pression (28,69) par un étranglement (73) à un conduit de décharge (59,72).

3. Dispositif d'injection de carburant selon la revendication 2, caractérisé en ce que dans la liaison entre la chambre de pression (28,69) et la chambre (44) on dispose un étranglement (54,58) (Fig.3).

4. Dispositif d'injection de carburant selon les revendications 1 à 3, caractérisé en ce qu'on forme la paroi mobile comme un piston de réservoir (40) pouvant coulisser dans un cylindre (39) en opposition à un ressort de rappel (42).

5. Dispositif d'injection de carburant selon la revendication 4, caractérisé en ce que le piston de réservoir (40") présente sur sa face dirigée vers la chambre réservoir (38') de carburant une face d'étanchéité (76) qui coopère avec un siège de soupape (77) et qui partage la chambre réservoir (38') de carburant, par appui sur le siège de soupape, en une première chambre partielle de réservoir (78) reliée à la chambre (44) et en une deuxième chambre partielle de réservoir (79) reliée au cylindre de pompe (2) par le canal de décharge (36) (Fig.7).

6. Dispositif d'injection de carburant selon la revendication 5, caractérisé en ce qu'on délimite les deux chambres partielles de réservoir (78,79) par une pièce de face frontale du piston de réservoir (40") (Fig.7).

7. Dispositif d'injection selon la revendication 6, caractérisé en ce qu'on forme la face frontale (75) du piston de réservoir (40") en forme de cône et sa surface périphérique conique coopère en tant que surface d'étanchéité avec une nervure (77) annulaire sortant dans la chambre réservoir (38') en tant que siège de soupape (Fig.7).

8. Dispositif d'injection de carburant selon la revendication 7, caractérisé en ce qu'on réalise la nervure (77) à l'aide d'un rebord dans le cylindre (39) recevant le piston de réservoir (40") (Fig.7).

9. Dispositif d'injection selon la revendication 4, caractérisé en ce qu'on ferme la paroi de fermeture par un piston (64) de plus petit diamètre, qui peut se déplacer dans le piston de réservoir (40"), qui délimite la chambre de travail (68) dans un cylindre de travail (65), qu'on relie pour le refoulement indirect de la quantité de carburant s'écoulant par le canal de décharge (36) par un conduit de pression (36a") prolongé à la chambre (44) et qu'on peut décharger par l'intermédiaire d'un étranglement (67,73) (Fig.5 et 6).

10. Dispositif d'injection de carburant selon la revendication 2, caractérisé en ce qu'on délimite la chambre de pression (69) par un poinçon actionné du côté ressort de soupape par l'organe de fermeture de soupape de la soupape d'injection de carburant (70) dans un cylindre (71) délimité par lui (Fig.5 et 6).

11. Dispositif d'injection de carburant selon la revendication 10, caractérisé en ce qu'on forme l'étranglement de décharge entre la surface cylindrique du poinçon (74) et la paroi du cylindre (71) et qu'elle débouche dans la chambre de ressort (28') déchargée de la soupape d'injection de carburant.

12. Dispositif d'injection de carburant pour moteurs à combustion interne comprenant un piston de pompe (3) qui délimite dans un cylindre de pompe (2) une chambre de travail de pompe (6) qu'on peut relier à une soupape d'injection de carburant (9) par un conduit d'injection de carburant (116) passant notamment dans un boîtier (buse de pompe) comprenant le cylindre de pompe (102) et la soupape d'injection de carburant (9), conduit (116) dans lequel on implante une soupape de pression s'ouvrant dans le sens du refoulement, et il comprend une vanne de commande (84), grâce à laquelle on relie un canal de décharge (136,136a) à la chambre de travail de la pompe (6) au moins à la fin de la course efficace de refoulement du piston de pompe, le canal de décharge (136,136a) étant communication avec une chambre réservoir (169) de carburant présentant une paroi mobile, et qui comprend un siège de soupape (117) délimitant une section d'un conduit (116) d'injection de carburant, siège avec lequel coopère un élément de fermeture de soupape de pression (121) de la soupape de pression logé dans un cylindre de guidage (120), dont l'extrémité portant la face d'étanchéité plonge du cylindre de guidage dans une chambre (118) reliée au conduit d'injection de carburant, à cet endroit présente un épaulement de pression (23) qui et sur la face arrière est chargé par un ressort de soupape (122) et qui peut coulisser à l'encontre de la force du ressort de soupape (122) jusqu'à l'appui sur une butée, dispositif caractérisé en ce qu'on relie le canal de décharge (136) en tant que canal de remplissage et de décharge par le réservoir de carburant (169) et un étranglement (88) à une source (90) d'alimentation, qu'on connecte à la chambre de travail de pompe lors de la course d'aspiration du piston de pompe et pendant la phase de décharge commandée par la soupape (84) pendant la course de refoulement du piston de pompe par le canal de décharge (136), et en ce que l'organe de fermeture de soupape (121) délimite sur sa face arrière dans le cylindre de guidage (120) une chambre (144) qui est en liaison permanente avec la source d'alimentation en carburant (90) et avec le canal de décharge (136) seulement en position fermée de l'organe de fermeture de soupape et en ce qu'on forme la paroi mobile (174) du réservoir de carburant (16a) par un poinçon (170) actionné du côté ressort de soupape par l'organe de fermeture de soupape (155) de la soupape d'injection de carburant dans un cylindre (171) délimité par lui.

13. Dispositif d'injection de carburant selon la revendication 12, caractérisé en ce qu'on forme l'organe de fermeture (121) de soupape de pression comme un piston forme de pot, à l'intérieur duquel on place le ressort de soupape (122), en ce qu'un canal (86) de liaison de la chambre (144) au canal de décharge (136) dans la pièce côté butée du cylindre de guidage (120) débouche dans sa paroi radiale et qu'on l'obture par un arête de commande (96) sur la paroi cylindrique du piston en forme de pot par son appui sur la butée (149).

14. Dispositif d'injection de carburant selon la revendication 13, caractérisé en ce que le canal (86) débouche dans une gorge annulaire (95) de la paroi du cylindre de guidage (120).

15. Dispositif d'injection de carburant selon l'une des revendications précédentes, caractérisé en ce qu'on met sous contrainte l'épaulement de pression (123) de l'organe de fermeture de soupape de pression (121) sous la pression régnant dans le conduit (116) d'injection de carburant entre la soupape d'injection et l'organe de fermeture de soupape de pression.

FIG.1

FIG.2

EP 0 204 982 B1

FIG.3

FIG.4

EP 0 204 982 B1

Fig.5

FIG.6

FIG.8

FIG.9

# FIG.7